# EUROPEAN PATENT APPLICATION

(11) **EP 4 156 018 A1**
(43) Date of publication of application: **29.03.2023**
(21) Application number: 22170686.4
(22) Date of filing: 29.04.2022
(51) Int. Cl.: G06K 9/00

(54) **SUBWAY OPERATING STATE PREDICTION METHOD AND APPARATUS, ELECTRONIC DEVICE AND STORAGE MEDIUM**

(30) Priority: 28.09.2021 CN 202111141016
(71) Applicant: BEIJING BAIDU NETCOM SCIENCE AND TECHNOLOGY CO. LTD., 100085 Beijing (CN)
(72) Inventor: LI, Qi, Beijing, 100085 (CN); JIA, Hailu, Beijing, 100085 (CN); LIU, Xiaotong, Beijing, 100085 (CN)
(74) Representative: dompatent von Kreisler Selting Werner - Partnerschaft von Patent- und Rechtsanwälten mbB

(57) **Abstract**

The present disclosure provides a subway operating state prediction method and apparatus, an electronic device and a storage medium, and relates to technical fields such as intelligent transportation and artificial intelligence. A specific implementation solution involves: acquiring air pressure information of a mobile terminal used by a user on a subway at respective moments in a time window; and predicting an operating state of the subway in the time window based on the air pressure information at the moments in the time window. The efficiency of identification of the operating state of the subway can be effectively improved according to the technology of the present disclosure.

## Description

### Field of the Disclosure

The present disclosure relates to the field of computer technologies, specifically to technical fields such as intelligent transportation and artificial intelligence, and in particular, to a subway operating state prediction method and apparatus, an electronic device and a storage medium.

### Background of the Disclosure

Real-time detection of subway operating states can not only help optimize network positioning effects in subway scenarios, but also provide users with navigation services such as enter and exit broadcasting and arrival reminder, bringing travel convenience to a large number of subway users. At the same time, the real-time detection of subway operating states is also an important link to realize intelligent transportation.

At present, according to subway operating state identification technologies, move and stop states of subway trains are generally determined by using acceleration sensors embedded in mobile phones, and are identified by processing triaxial acceleration data and constructing a model.

### Summary of the Disclosure

The present disclosure provides a subway operating state prediction method and apparatus, an electronic device and a storage medium.

According to one aspect of the present disclosure, a subway operating state prediction method is provided, including:
acquiring air pressure information of a mobile terminal used by a user on a subway at respective moments in a time window; and
predicting an operating state of the subway in the time window based on the air pressure information at the moments in the time window.

According to another aspect of the present disclosure, a subway operating state prediction apparatus is provided, including:
an acquisition module configured to acquire air pressure information of a mobile terminal used by a user on a subway at respective moments in a time window; and
a prediction module configured to predict an operating state of the subway in the time window based on the air pressure information at the moments in the time window.

According to still another aspect of the present disclosure, an electronic device is provided, including:
at least one processor; and
a memory in communication connection with the at least one processor; wherein
the memory stores instructions executable by the at least one processor, and the instructions are executed by the at least one processor to enable the at least one processor to perform the method as described in the above aspects and any possible implementation.

According to yet another aspect of the present disclosure, a non-transitory computer-readable storage medium storing computer instructions is provided, wherein the computer instructions are configured to cause a computer to perform the method as described in the above aspects and any possible implementation.

According to a further aspect of the present disclosure, a computer program product is provided, including a computer program, wherein, when the computer program is executed by a processor, the method as described in the above aspects and any possible implementation is performed.

The efficiency of identification of the operating state of the subway can be effectively improved according to the technology of the present disclosure.

### Brief Description of Drawings

The accompanying drawings are intended to provide a better understanding of the solutions and do not constitute a limitation on the present disclosure. In the drawings,
FIG. 1 is a schematic diagram according to a first embodiment of the present disclosure;
FIG. 2 is a schematic diagram according to a second embodiment of the present disclosure;
FIG. 3(3A&3B) is a schematic diagram according to a third embodiment of the present disclosure;
FIG. 4 is a schematic diagram according to a fourth embodiment of the present disclosure;
FIG. 5 is a schematic diagram according to a fifth embodiment of the present disclosure; and
FIG. 6 is a block diagram of an electronic device configured to perform a subway operating state prediction method according to an embodiment of the present disclosure.

### Detailed Description of Preferred Embodiments

Exemplary embodiments of the present disclosure are illustrated below with reference to the accompanying drawings, which include various details of the present disclosure to facilitate understanding and should be considered only as exemplary. Similarly, for clarity and simplicity, descriptions of well-known functions and structures are omitted in the following description.

It is to be noted that the terminal device involved in the embodiments of the present disclosure may include, but is not limited to, smart devices such as mobile phones, Personal Digital Assistants (PDAs), wireless handheld devices, and Tablet Computers. The display device may include, but is not limited to, devices with a display function such as personal computers and televisions.

In addition, the term "and/or" herein is merely an association relationship describing associated objects, indicating that three relationships may exist. For example, A and/or B indicates that there are three cases of A alone, A and B together, and B alone. Besides, the character "/" herein generally means that associated objects before and after it are in an "or" relationship.

When an operating state of a subway is identified based on an acceleration sensor, if the mobile phone is in a hand-held state, due to different hand-held postures and a buffering effect of a human body, data features of the acceleration sensor on the subway are not obvious and cannot be used for discrimination. Therefore, during the identification in the prior art, the mobile phone is placed on the subway ground for experiments to acquire data, which does not conform to actual use scenarios of users and cannot realize engineering landing in real scenarios. In addition, considering that the users may walk, sit and shake in a subway car, which may have a great impact on acceleration, in this case, it is easy to misjudge an operating state of the subway by using the acceleration, thereby affecting the accuracy of identification. Based on the above problems, a subway operating state prediction method according to the present disclosure is proposed as follows.

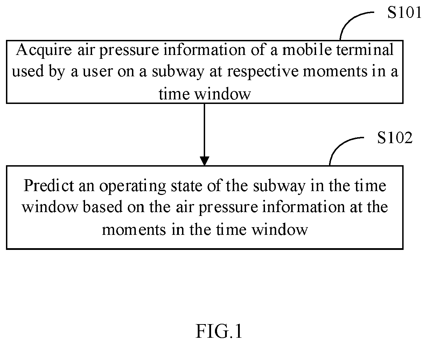

FIG. 1 is a schematic diagram according to a first embodiment of the present disclosure. As shown in FIG. 1, this embodiment provides a subway operating state prediction method, which may specifically include the following steps.

In S101, air pressure information of a mobile terminal used by a user on a subway at respective moments in a time window is acquired.

In S102, an operating state of the subway in the time window is predicted based on the air pressure information at the moments in the time window.

The subway operating state prediction method in this embodiment may be applied to mobile terminal sides, specifically to mobile terminals, or to other electronic devices that can acquire air pressure data of mobile terminals in real time, which is not limited herein.

In application scenarios of this embodiment, the user may hold the mobile terminal or put the mobile terminal in a pocket or backpack, provided that it is in line with scenarios where users generally use mobile terminals.

In this embodiment, the step of acquiring air pressure information of a mobile terminal used by a user on a subway at respective moments in a time window may be performed based on air pressure data of an air pressure detection chip built in the mobile terminal.

In this embodiment, in order to accurately predict the operating state of the subway, the operating state of the subway is predicted based on the time window. The time window may be 3s, 5s, or 7s, etc. Preferably, the time window may be an odd number. Due to the use of the concept of time window, the air pressure information of the mobile terminal used by the user on the subway is not required to be acquired in real time, and may be acquired once every a certain sampling cycle. That is, the air pressure information of the mobile terminal used by the user on the subway at the moments in the time window may be acquired according to a preset sampling cycle.

In one embodiment of the present disclosure, the sampling cycle may be required to be less than a length of the time window. This may ensure that detection data of the air pressure detection chip required to acquire the air pressure information overlaps during two adjacent sampling, which can better reflect a change trend of the data and can further improve it.

According to the subway operating state prediction method in this embodiment, air pressure information of a mobile terminal used by a user on a subway at respective moments in a time window is acquired; and an operating state of the subway in the time window is predicted based on the air pressure information at the moments in the time window, which neither requires the user to place the mobile terminal on a floor of a subway car nor requires the user to stop in the car, provided that it is in line with scenarios where users generally use mobile terminals. The user may hold the mobile terminal or place the mobile terminal in a clothing pocket, and the user may sit, stand and shake, without affecting the accuracy of prediction of the operating state of the subway. Therefore, the subway operating state prediction method in this embodiment has strong applicability, which can predict the operating state of the subway very accurately and improve the efficiency of identification of the operating state of the subway.

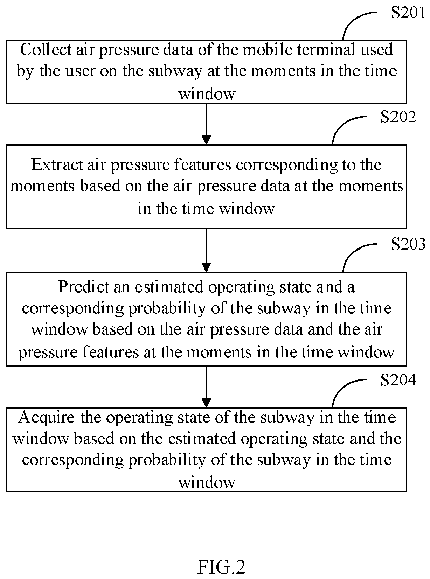

FIG. 2 is a schematic diagram according to a second embodiment of the present disclosure. A subway operating state prediction method in this embodiment further describes the technical solution of the present application in more detail on the basis of the technical solution in the embodiment shown in FIG. 1. As shown in FIG. 2, the subway operating state prediction method in this embodiment may specifically include the following steps.

In S201, air pressure data of the mobile terminal used by the user on the subway at the moments in the time window is collected.

Specifically, air pressure data on a barometer chip on the mobile terminal at respective moments in the time window may be collected, and the collected air pressure data is filtered.

In order to simulate a real scenario of the user in the subway, in the embodiment of the present disclosure, data may be collected by maintaining a posture of holding the mobile terminal instead of placing the mobile terminal in a running car. At the same time, in order to improve universality of an algorithm, in the present disclosure, subway data of different lines is collected by using different mobile phone models. As can be seen from the collected data, triaxial acceleration data of the acceleration sensor of the mobile terminal in the hand-held posture cannot reflect features of the vehicle during the driving. The movement of the subway train in and out of a tunnel is similar to piston movement, and a change in air pressure caused by it is obvious and has independent features. Therefore, the operating state of the subway is identified by using air pressure data in the present disclosure.

In order to eliminate the influence of noise, Savitzky-Golay filtering, which is often used in acoustics, may also be introduced in the present disclosure to filter the collected air pressure data on the barometer chip by polynomial fitting, which greatly eliminates the influence of noise and magnifies features of the data, and can effectively improve the accuracy of state identification.

In S202, air pressure features corresponding to the moments are extracted based on the air pressure data at the moments in the time window.

Preferably, in the present disclosure, based on an edge detection algorithm in signal science, at least one feature of variance, gradient, deviation from mean, short-time energy and a short-time zero crossing rate may be extracted from the filtered air pressure data at the moments in the time window as the air pressure features corresponding to the moments.

Steps S201-S202 show a preferred implementation of step S101 in the embodiment shown in FIG. 1. In this case, the air pressure information at the moments in the time window not only includes original air pressure data collected in step S201 but also includes the air pressure features extracted in step S202. In practical applications, step S101 may also include only step S201 or step S202. However, in this embodiment, step S201 and step S202 are both included, so that the operating state of the subway can be predicted more accurately.

In S203, an estimated operating state and a corresponding probability of the subway in the time window are predicted based on the air pressure data and the air pressure features at the moments in the time window.

In S204, the operating state of the subway in the time window is acquired based on the estimated operating state and the corresponding probability of the subway in the time window.

For example, in one embodiment of the present disclosure, historical data in lots of time windows may be pre-counted, and air pressure data and air pressure features at respective moments in each time window and a corresponding operating state of the subway are recorded in the historical data. Then, the time window in the historical data with the air pressure data and the air pressure features most similar to those at respective moments in a current time window is acquired, an operating state in the most similar time window is taken as an estimated operating state of the current time window, and similarity is taken as the corresponding probability.

In another example, in another embodiment of the present disclosure, during specific implementation, step S203 may also include the following steps.
(1) An estimated operating state of the subway at the moments in the time window is predicted based on the air pressure information at the moments in the time window.
(2) The estimated operating state and the corresponding probability of the subway in the time window are acquired based on the estimated operating state of the subway at the moments in the time window.

In one embodiment of the present disclosure, air pressure information at each historical moment and a corresponding operating state may be recorded based on historical data. Based on the historical data, estimated operating states of the subway at respective moments may be predicted based on the air pressure information at the corresponding moments in the time window.

Then, based on the estimated operating states of the subway at the moments in the time window, statistical calculation is performed, and the estimated operating state and the corresponding probability of the subway in the time window are acquired. For example, in a time window of 5s, estimated operating states at respective moments are [0, 1, 1, 1, 1], where 0 denotes stop, and 1 denotes move. There are more predicted move states than stop states at respective moments in the time window, so it may be considered that the estimated operating state of the subway in the current time window is a move state, and the corresponding probability may be equal to (1+1+1+1) /5.

Alternatively, in a time window of 7s, estimated operating states at respective moments are [0, 1, 0, 1, 0, 1, 1], where 0 denotes enter, and 1 denotes exit. There are more predicted exit states than enter states at respective moments in the time window, so it may be considered that the estimated operating state of the subway in the current time window is an exit state, and the corresponding probability may be equal to (1+1+1+1) /7.

In the embodiment of the present disclosure, the operating state of the subway may be divided into a move state and a stop state. Further, they are similar to an enter state and an exit state of piston movement, and air pressure information is completely different. Therefore, the move state may be further divided into an enter state and an exit state.

During specific implementation, step S203 may be first performed to predict, based on the air pressure data and the air pressure features at the moments in the time window, whether an estimated operating state of the subway in the time window is a move state or a stop state and a corresponding probability. Then, S204 is performed to predict, based on the estimated operating state and the corresponding probability of the subway in the time window, whether the operating state of the subway in the time window is a move state or a stop state.

If the operating state of the subway in the time window is a move state, step S203 may be performed again to predict, based on the air pressure data and the air pressure features at the moments in the time window, whether the estimated operating state of the subway in the time window is an enter state or an exit state and a corresponding probability. Then, S204 is performed to predict, based on the estimated operating state and the corresponding probability of the subway in the time window, whether the operating state of the subway in the time window is an enter state or an exit state.

That is, in this embodiment, considering that it is easier to distinguish the move state from the stop state, whether the operating state of the subway is the move state or the stop state may be identified first. If it is the move state, in consideration of obviously different feature information of the enter state and the exit state, whether the operating state of the subway is the enter state or the exit state may be further identified, so that the operating state of the subway can be predicted effectively and accurately. In addition, a distance between stations of a subway in a city is short, the subway is either entering or leaving a station during the running, and the smooth operating time is rare. In consideration of the above, in the embodiment, the states in subway movement are classified into enter states and exit states, and other states are not considered for the time being.

Further optionally, during specific implementation, S204 of acquiring the operating state of the subway in the time window based on the estimated operating state and the corresponding probability of the subway in the time window in this embodiment may include the following manners.

In the first manner, the operating state of the subway in the time window is acquired based on the estimated operating state and the corresponding probability of the subway in the time window and with reference to a preset probability threshold and an operating state of the subway in a previous time window in a subway state sequence.

The preset probability threshold may be set based on actual experience, which may be, for example, 0.5, 0.7, or other probability values between 0 and 1. The subway state sequence is configured to record subway operating states in various time windows. For example, after the operating state of the subway in the current time window is predicted, the operating state of the subway in the current time window is also required to be added to the subway state sequence.

For example, during specific implementation, the following steps may be included.

In (a1), it is detected whether the probability is greater than or equal to the preset probability threshold. If yes, step (b1) is performed. If no, step (c1) is performed.

In (b1), the estimated operating state of the subway in the time window is taken as the operating state of the subway in the time window.

In (c1), the operating state of the subway in the previous time window is acquired from the subway state sequence as the operating state of the subway in the time window.

In the second manner, the operating state of the subway in the time window is acquired based on the estimated operating state and the corresponding probability of the subway in the time window and with reference to a pre-generated state transfer information table and an operating state of the subway in a previous time window in a subway state sequence.

The state transfer information table is obtained by conducting statistics on historical state information of the subway. Specifically, a probability of each state transfer may be recorded in the state transfer information table. For example, a two-dimensional state transfer information table may be calculated based on move states and stop states of the subway, including move-stop, move-motion, stop-move and move-move state transfer probabilities. Specifically, probability values are obtained based on statistics of historical state transfer information. In another example, a three-dimensional state transfer information table may be calculated for three operating states of the subway, namely enter, exit and stop, including transfer between any two of the three operating states and transfer probabilities obtained based on the statistics of the historical state transfer information.

For example, during specific implementation, the following steps may be included.

In (a2), the operating state of the subway in the previous time window is acquired from the subway state sequence.

In (b2), it is detected, based on the operating state of the subway in the previous time window and an estimated operating state and a corresponding probability of the subway in a current time window, whether the probability is less than a corresponding state transfer probability in the state transfer information table; if yes, step (c2) is performed; otherwise, step (d2) is performed.

In (c2), the operating state of the subway in the previous time window is taken as the operating state of the subway in the time window.

In (d2), the estimated operating state of the subway in the time window is taken as the operating state of the subway in the time window.

In the above two manners, the operating state of the subway can be accurately predicted. According to the subway operating state prediction method in this embodiment, the accuracy of prediction of the operating state of the subway can be effectively improved by use of the above technical solution. It is verified by tests that, according to the solution in this embodiment, the accuracy of state identification may reach more than 99%, and the delay in detection of a stop state may be within 3 s. Besides, with the identification on the operating state of the subway in this embodiment, navigation services such as enter and exit broadcasting and arrival reminder can be provided for users accurately and in a timely manner.

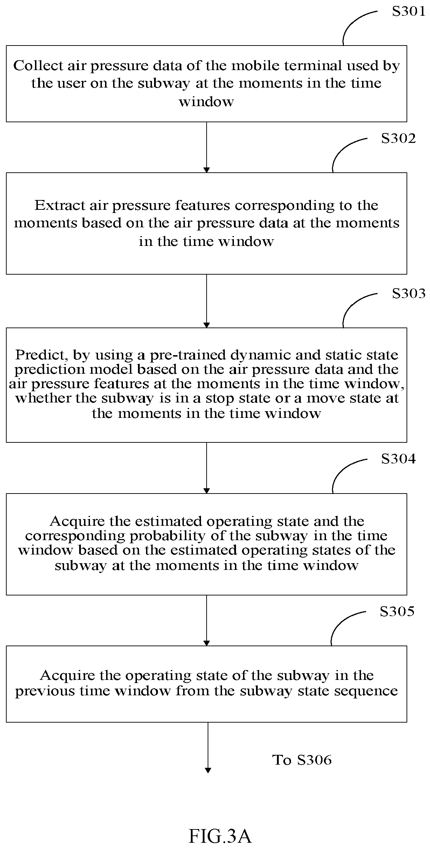

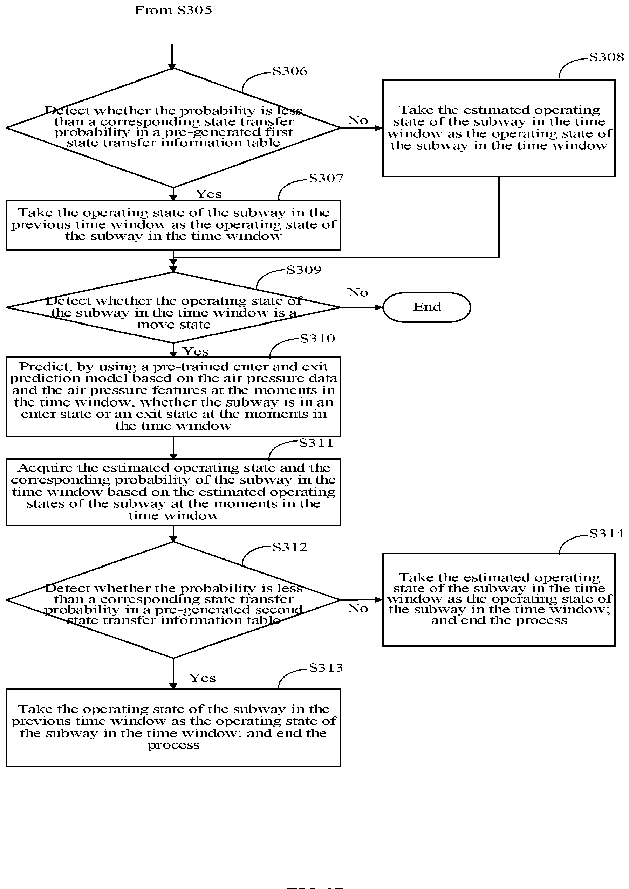

FIG. 3 is a schematic diagram according to a third embodiment of the present disclosure. A subway operating state prediction method in this embodiment further describes the technical solution of the present application in more detail on the basis of the technical solution in the embodiment shown in FIG. 2. As shown in FIG. 3, the subway operating state prediction method in this embodiment may specifically include the following steps.

In S301, air pressure data of the mobile terminal used by the user on the subway at the moments in the time window is collected.

In S302, air pressure features corresponding to the moments are extracted based on the air pressure data at the moments in the time window.

In S303, it is predicted, by using a pre-trained dynamic and static state prediction model based on the air pressure data and the air pressure features at the moments in the time window, whether the subway is in a stop state or a move state at the moments in the time window.

In S304, the estimated operating state and the corresponding probability of the subway in the time window are acquired based on the estimated operating state of the subway at the moments in the time window.

In S305, the operating state of the subway in the previous time window is acquired from the subway state sequence.

In S306, it is detected, based on the operating state of the subway in the previous time window and an estimated operating state and a corresponding probability of the subway in a current time window, whether the probability is less than a corresponding state transfer probability in a pre-generated first state transfer information table; if yes, step S307 is performed; otherwise, step S308 is performed.

The first state transfer information table in this embodiment is the two-dimensional state transfer information table in the embodiment shown in FIG. 2, including move-stop, move-motion, stop-move and move-move state transfer probabilities. That is, the probability acquired in step S304 in this embodiment is a state transfer probability from the operating state of the subway in the previous time window to the estimated operating state of the subway in the current time window.

In S307, the operating state of the subway in the previous time window is taken as the operating state of the subway in the time window; and step S309 is performed.

In S308, the estimated operating state of the subway in the time window is taken as the operating state of the subway in the time window; and step S309 is performed.

In S309, it is detected whether the operating state of the subway in the time window is a move state; if yes, step S310 is further performed; otherwise, the process ends.

In S310, it is predicted, by using a pre-trained enter and exit prediction model based on the air pressure data and the air pressure features at the moments in the time window, whether the subway is in an enter state or an exit state at the moments in the time window.

In S311, the estimated operating state and the corresponding probability of the subway in the time window are acquired based on the estimated operating states of the subway at the moments in the time window.

In S312, it is detected, based on the operating state of the subway in the previous time window and the estimated operating state and the corresponding probability of the subway in the current time window, whether the probability is less than a corresponding state transfer probability in a pre-generated second state transfer information table; if yes, step S313 is performed; otherwise, step S314 is performed.

The second state transfer information table in this embodiment is the three-dimensional state transfer information table in the embodiment shown in FIG. 2, including enter-enter, enter-stop, enter-exit, stop-enter, stop-stop, stop-exit, exit-enter, exit-stop and exit-exit state transfer probabilities based on statistics on historical state information.

In S313, the operating state of the subway in the previous time window is taken as the operating state of the subway in the time window; and the process ends.

In S314, the estimated operating state of the subway in the time window is taken as the operating state of the subway in the time window; and the process ends.

It is to be noted that steps S305-S314 are implemented by using the second implementation of step S204 in the embodiment shown in FIG. 2. In practical applications, optionally, the process may also be implemented by using the first implementation of step S204 in the embodiment shown in FIG. 2.

The pre-trained dynamic and static state prediction model and enter and exit prediction model used in this embodiment are implemented using an XGBoost model. XGBoost adds regular terms in a construction stage of a decision tree, which effectively prevents overfitting of the model, improves generalization capability of the model, and reduces the impact of insufficient data collection. At the same time, XGBoost performs second-order Taylor expansion on a loss function, which can accelerate the convergence and reduce the training time.

The dynamic and static state prediction model and the enter and exit prediction model are both dichotomy models. The dynamic and static state prediction model is configured to predict whether the operating state of the subway at each moment is a stop state or a move state. The stop state may include a stop state of the subway that the user takes with the mobile terminal, and a situation that the user leaves the subway car with the mobile terminal, such as waiting on the platform, or in the stairs or elevator of the subway station. The enter and exit prediction model is configured to predict whether the operating state of the subway at each moment is an enter state or an exit state.

In this embodiment, the dynamic and static state prediction model and the enter and exit prediction model have similar model structures but different model parameters, and then different states may be predicted based on a same input parameter.

The dynamic and static state prediction model and the enter and exit prediction model in this embodiment are based on a same training principle. Prior to the training, a plurality of pieces of training data is required to be pre-collected, which is similar to the subway operating state prediction method in this embodiment. Each piece of training data may include air pressure data and air pressure features at respective moments in a time window, and at the same time, real operating states of the subway at the moments are further required to be marked. Then, during the training, the air pressure data and air pressure features at the moments in the training data are inputted to either of the dynamic and static state prediction model and the enter and exit prediction model, the model predicts predicted operating states at the moments, and then a loss function is constructed based on the predicted operating states and the real operating states. If the loss function does not converge, parameters of the model are adjusted to enable the loss function to converge. The dynamic and static state prediction model and the enter and exit prediction model are constantly trained in the above manner respectively by using the plurality of pieces of training data, until the loss function converges, and the dynamic and static state prediction model and the enter and exit prediction model are determined respectively.

It is to be noted that, for the dynamic and static state prediction model, considering complexity of subway scenarios, such as riding straight ladders, escalators, or walking in a windy transfer tunnel and other special scenarios, during the training, weights of static samples corresponding to the stop state may be increased, and the learning of the training data of the stop state by the static and static state prediction model may be strengthened, thereby reducing the influence of misidentification on users.

Different from the subway operating state prediction method in this embodiment, although the concept of time window is also involved during the training, the time window is configured only to acquire air pressure feature information during the training. In addition, optionally, the training data may not include the air pressure feature information. In this case, there is no need to involve the concept of time window. Certainly, the training data may also include only the air pressure feature information. In short, information included in the training data during the training is also required during the prediction, provided that they are consistent. In the embodiments of FIG. 2 and FIG. 3, the predicted state of the subway is more accurate when the air pressure information includes both air pressure data and air pressure features than when only one of them is included.

According to the subway operating state prediction method in this embodiment, the operating state of the subway is predicted by using the dynamic and static state prediction model and the enter and exit prediction model, so that the accuracy and intelligence of identification of the operating state of the subway can be further improved.

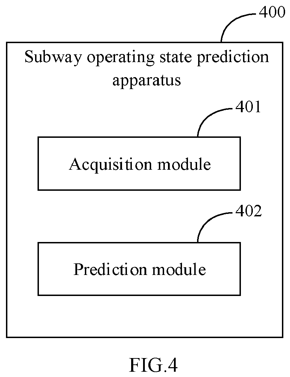

FIG. 4 is a schematic diagram according to a fourth embodiment of the present disclosure. As shown in FIG. 4, a subway operating state prediction apparatus 400 is provided. The apparatus may be located in a mobile terminal or independent of the mobile terminal, provided with air pressure information at the side of the mobile terminal can be acquired in real time. The subway operating state prediction apparatus 400 in this embodiment includes:
an acquisition module 401 configured to acquire air pressure information of a mobile terminal used by used by a user on a subway at respective moments in a time window; and
a prediction module 402 configured to predict an operating state of the subway in the time window based on the air pressure information at the moments in the time window.

According to the subway operating state prediction apparatus 400 in this embodiment, the implementation principle and the technical effect of prediction of the operating state of the subway realized using the above modules are the same as those in the above related method embodiments. Details may be obtained with reference to the description in the related embodiments, which are not described in detail herein.

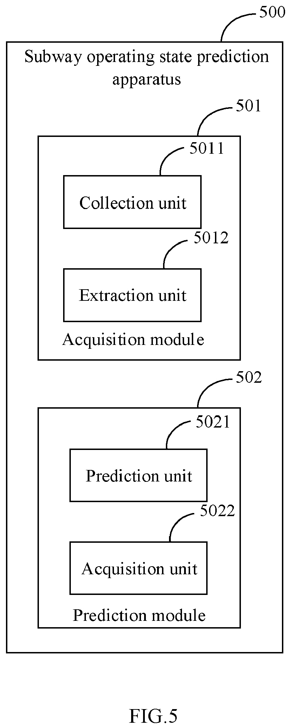

FIG. 5 is a schematic diagram according to a fifth embodiment of the present disclosure. As shown in FIG. 5, a subway operating state prediction apparatus 500 in this embodiment further describes the technical solution of the present application in more detail on the basis of the technical solution in the embodiment shown in FIG. 4.

As shown in FIG. 5, the same as the embodiment shown in FIG. 4, the subway operating state prediction apparatus 500 in this embodiment includes: an acquisition module 501 and a prediction module 502.

As shown in FIG. 5, further optionally, in the subway operating state prediction apparatus 500 in this embodiment, the acquisition module 501 includes:
a collection unit 5011 configured to collect air pressure data of the mobile terminal used by the user on the subway at the moments in the time window; and/or
an extraction unit 5012 configured to extract air pressure features corresponding to the moments based on the air pressure data at the moments in the time window.

As shown in FIG. 5, further optionally, in the subway operating state prediction apparatus 500 in this embodiment, the prediction module 502 includes:
a prediction unit 5021 configured to predict an estimated operating state and a corresponding probability of the subway in the time window based on the air pressure information at the moments in the time window; and
an acquisition unit 5022 configured to acquire the operating state of the subway in the time window based on the estimated operating state and the corresponding probability of the subway in the time window.

Further optionally, the prediction unit 5021 is configured to:
predict estimated operating states of the subway at the moments in the time window based on the air pressure information at the moments in the time window; and
acquire the estimated operating state and the corresponding probability of the subway in the time window based on the estimated operating states of the subway at the moments in the time window.

Further optionally, the prediction unit 5021 is configured to:
predict, by using a pre-trained dynamic and static state prediction model based on the air pressure information at the moments in the time window, whether the subway is in a stop state or a move state at the moments in the time window; and/or
predict, by using a pre-trained enter and exit prediction model based on the air pressure information at the moments in the time window, whether the subway is in an enter state or an exit state at the moments in the time window if it is determined that the subway is in the move state.

Further optionally, the acquisition unit 5022 is configured to:
acquire the operating state of the subway in the time window based on the estimated operating state and the corresponding probability of the subway in the time window and with reference to a preset probability threshold and an operating state of the subway in a previous time window in a subway state sequence; or
acquire the operating state of the subway in the time window based on the estimated operating state and the corresponding probability of the subway in the time window and with reference to a pre-generated state transfer information table and an operating state of the subway in a previous time window in a subway state sequence.

Further optionally, the acquisition unit 5022 is configured to:
detect whether the probability is greater than or equal to the preset probability threshold; and
take the estimated operating state of the subway in the time window as the operating state of the subway in the time window if yes.

Further optionally, the acquisition unit 5022 is further configured to:
acquire the operating state of the subway in the previous time window from the subway state sequence as the operating state of the subway in the time window if the probability is less than the preset probability threshold.

Further optionally, the acquisition unit 5022 is configured to:
acquire the operating state of the subway in the previous time window from the subway state sequence;
detect, based on the operating state of the subway in the previous time window and the estimated operating state and the corresponding probability of the subway in the time window, whether the probability is less than a corresponding state transfer probability in the state transfer information table; and
take the operating state of the subway in the previous time window as the operating state of the subway in the time window if yes.

Further optionally, the acquisition unit 5022 is further configured to:
take the estimated operating state of the subway in the time window as the operating state of the subway in the time window if the probability is greater than or equal to the corresponding state transfer probability in the state transfer information table.

According to the subway operating state prediction apparatus 400 in this embodiment, the implementation principle and the technical effect of prediction of the operating state of the subway realized using the above modules are the same as those in the above related method embodiments. Details may be obtained with reference to the description in the related embodiments, which are not described in detail herein.

Acquisition, storage and application of users' personal information involved in the technical solutions of the present disclosure comply with relevant laws and regulations, and do not violate public order and moral.

According to embodiments of the present disclosure, the present disclosure further provides an electronic device, a readable storage medium and a computer program product.

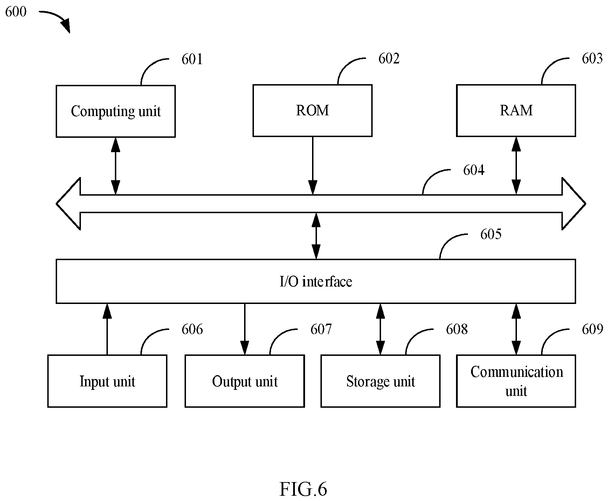

FIG. 6 is a schematic block diagram of an exemplary electronic device 600 configured to implement embodiments of the present disclosure. The electronic device is intended to represent various forms of digital computers, such as laptops, desktops, workbenches, PDAs, servers, blade servers, mainframe computers and other suitable computing devices. The electronic device may further represent various forms of mobile devices, such as PDAs, cellular phones, smart phones, wearable devices and other similar computing devices. The components, their connections and relationships, and their functions shown herein are examples only, and are not intended to limit the implementation of the present disclosure as described and/or required herein.

As shown in FIG. 6, the device 600 includes a computing unit 601, which may perform various suitable actions and processing according to a computer program stored in a read-only memory (ROM) 602 or a computer program loaded from a storage unit 608 into a random access memory (RAM) 603. The RAM 603 may also store various programs and data required to operate the device 600. The computing unit 601, the ROM 602 and the RAM 603 are connected to one another by a bus 604. An input/output (I/O) interface 605 is also connected to the bus 604.

A plurality of components in the device 600 are connected to the I/O interface 605, including an input unit 606, such as a keyboard and a mouse; an output unit 607, such as various displays and speakers; a storage unit 608, such as disks and discs; and a communication unit 609, such as a network card, a modem and a wireless communication transceiver. The communication unit 609 allows the device 600 to exchange information/data with other devices over computer networks such as the Internet and/or various telecommunications networks.

The computing unit 601 may be a variety of general-purpose and/or special-purpose processing components with processing and computing capabilities. Some examples of the computing unit 601 include, but are not limited to, a central processing unit (CPU), a graphics processing unit (GPU), various artificial intelligence (AI) computing chips, various computing units that run machine learning model algorithms, a digital signal processor (DSP), and any appropriate processor, controller or microcontroller, etc. The computing unit 601 performs the methods and processing described above, such as the method according to the present disclosure. For example, in some embodiments, the method according to the present disclosure may be implemented as a computer software program that is tangibly embodied in a machine-readable medium, such as the storage unit 608. In some embodiments, part or all of a computer program may be loaded and/or installed on the device 600 via the ROM 602 and/or the communication unit 609. One or more steps of the method according to the present disclosure described above may be performed when the computer program is loaded into the RAM 603 and executed by the computing unit 601. Alternatively, in other embodiments, the computing unit 601 may be configured to perform the method according to the present disclosure by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a complex programmable logic device (CPLD), computer hardware, firmware, software, and/or combinations thereof. Such implementations may include implementation in one or more computer programs that are executable and/or interpretable on a programmable system including at least one programmable processor, which can be special or general purpose, configured to receive data and instructions from a storage system, at least one input apparatus, and at least one output apparatus, and to transmit data and instructions to the storage system, the at least one input apparatus, and the at least one output apparatus.

Program codes configured to implement the methods in the present disclosure may be written in any combination of one or more programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a stand-alone package, or entirely on a remote machine or a server.

In the context of the present disclosure, machine-readable media may be tangible media which may include or store programs for use by or in conjunction with an instruction execution system, apparatus or device. The machine-readable media may be machine-readable signal media or machine-readable storage media. The machine-readable media may include, but are not limited to, electronic, magnetic, optical, electromagnetic, infrared, or semiconductor systems, apparatuses or devices, or any suitable combinations thereof. More specific examples of machine-readable storage media may include electrical connections based on one or more wires, a portable computer disk, a hard disk, an RAM, an ROM, an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, speech input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN) and the Internet.

The computer system may include a client and a server. The client and the server are generally far away from each other and generally interact via the communication network. A relationship between the client and the server is generated through computer programs that run on a corresponding computer and have a client-server relationship with each other. The server may be a cloud server, a distributed system server, or a server combined with blockchain.

It should be understood that the steps can be reordered, added, or deleted using the various forms of processes shown above. For example, the steps described in the present disclosure may be executed in parallel or sequentially or in different sequences, provided that desired results of the technical solutions disclosed in the present disclosure are achieved, which is not limited herein.

## Claims

1. A subway operating state prediction method, comprising:
acquiring (S101) air pressure information of a mobile terminal used by a user on a subway at respective moments in a time window; and
predicting (S102) an operating state of the subway in the time window based on the air pressure information at the moments in the time window.

2. The method according to claim 1, wherein the step of acquiring air pressure information of a mobile terminal used by a user on a subway at respective moments in a time window comprises:
collecting air pressure data of the mobile terminal used by the user on the subway at the moments in the time window; and/or
extracting air pressure features corresponding to the moments based on the air pressure data at the moments in the time window.

3. The method according to claim 1, wherein the step of predicting an operating state of the subway in the time window based on the air pressure information at the moments in the time window comprises:
predicting an estimated operating state and a corresponding probability of the subway in the time window based on the air pressure information at the moments in the time window; and
acquiring the operating state of the subway in the time window based on the estimated operating state and the corresponding probability of the subway in the time window.

4. The method according to claim 3, wherein the step of predicting an estimated operating state and a corresponding probability of the subway in the time window based on the air pressure information at the moments in the time window comprises:
predicting estimated operating states of the subway at the moments in the time window based on the air pressure information at the moments in the time window; and
acquiring the estimated operating state and the corresponding probability of the subway in the time window based on the estimated operating states of the subway at the moments in the time window.

5. The method according to claim 4, wherein the step of predicting estimated operating states of the subway at the moments in the time window based on the air pressure information at the moments in the time window comprises:
predicting, by using a pre-trained dynamic and static state prediction model based on the air pressure information at the moments in the time window, whether the subway is in a stop state or a move state at the moments in the time window; and/or
predicting, by using a pre-trained enter and exit prediction model based on the air pressure information at the moments in the time window, whether the subway is in an enter state or an exit state at the moments in the time window if it is determined that the subway is in the move state.

6. The method according to any one of claims 3-5, wherein the step of acquiring the operating state of the subway in the time window based on the estimated operating state and the corresponding probability of the subway in the time window comprises:
acquiring the operating state of the subway in the time window based on the estimated operating state and the corresponding probability of the subway in the time window and with reference to a preset probability threshold and an operating state of the subway in a previous time window in a subway state sequence; or
acquiring the operating state of the subway in the time window based on the estimated operating state and the corresponding probability of the subway in the time window and with reference to a pre-generated state transfer information table and an operating state of the subway in a previous time window in a subway state sequence.

7. The method according to claim 6, wherein the step of acquiring the operating state of the subway in the time window based on the estimated operating state and the corresponding probability of the subway in the time window and with reference to a preset probability threshold and an operating state of the subway in a previous time window in a subway state sequence comprises:
detecting whether the probability is greater than or equal to the preset probability threshold; and
taking the estimated operating state of the subway in the time window as the operating state of the subway in the time window if the probability is greater than or equal to the preset probability threshold.

8. The method according to claim 7, wherein the step of acquiring the operating state of the subway in the time window based on the estimated operating state and the corresponding probability of the subway in the time window and with reference to a preset probability threshold and an operating state of the subway in a previous time window in a subway state sequence further comprises:
acquiring the operating state of the subway in the previous time window from the subway state sequence as the operating state of the subway in the time window if the probability is less than the preset probability threshold.

9. The method according to claim 6, wherein the step of acquiring the operating state of the subway in the time window based on the estimated operating state and the corresponding probability of the subway in the time window and with reference to a pre-generated state transfer information table and an operating state of the subway in a previous time window in a subway state sequence comprises:
acquiring the operating state of the subway in the previous time window from the subway state sequence;
detecting, based on the operating state of the subway in the previous time window and the estimated operating state and the corresponding probability of the subway in the time window, whether the probability is less than a corresponding state transfer probability in the state transfer information table; and
taking the operating state of the subway in the previous time window as the operating state of the subway in the time window if the probability is less than a corresponding state transfer probability in the state transfer information table.

10. The method according to claim 9, wherein the step of acquiring the operating state of the subway in the time window based on the estimated operating state and the corresponding probability of the subway in the time window and with reference to a pre-generated state transfer information table and an operating state of the subway in a previous time window in a subway state sequence further comprises:
taking the estimated operating state of the subway in the time window as the operating state of the subway in the time window if the probability is greater than or equal to the corresponding state transfer probability in the state transfer information table.

11. A subway operating state prediction apparatus (400), comprising:
an acquisition module (401) configured to acquire air pressure information of a mobile terminal used by used by a user on a subway at respective moments in a time window; and
a prediction module (402) configured to predict an operating state of the subway in the time window based on the air pressure information at the moments in the time window.

12. The apparatus (500) according to claim 11, wherein the acquisition module (501) comprises:
a collection unit (5011) configured to collect air pressure data of the mobile terminal used by the user on the subway at the moments in the time window; and/or
an extraction unit (5012) configured to extract air pressure features corresponding to the moments based on the air pressure data at the moments in the time window.

13. An electronic device, comprising:
at least one processor; and
a memory in communication connection with the at least one processor; wherein
the memory stores instructions executable by the at least one processor, and the instructions are executed by the at least one processor to enable the at least one processor to perform the method according to any one of claims 1-10.

14. Anon-transitory computer-readable storage medium storing computer instructions which, when executed by a computer, cause the computer to perform the method according to any one of claims 1-10.

15. A computer program product, comprising a computer program, wherein, when the computer program is executed by a processor, the method according to any one of claims 1-10 is performed.
